# EUROPÄISCHE PATENTANMELDUNG

(11) **EP 1 574 622 A1**
(43) Veröffentlichungstag der Anmeldung: **14.09.2005**
(21) Anmeldenummer: 05003008.9
(22) Anmeldetag: 12.02.2005
(51) Int. Cl.: E02B 3/10, E02B 3/06

(54) **Hochwasserschutzwand**

(30) Priorität: 02.03.2004 DE 102004010020
(71) Anmelder: Seemann, Wolfgang, 21039 Hamburg (DE)
(72) Erfinder: Seemann, Wolfgang, 21039 Hamburg (DE)
(74) Vertreter: von Eichel-Streiber, Caspar

(57) **Zusammenfassung**

Um eine Hochwasserschutzwand zum Zurückhalten von Wasser im Uferbereich von Gewässern, wie Flüssen, Seen, Meeren oder dergleichen, bei über den Normalpegel steigenden Wasserstand mit einer ortsfest mit dem Uferbereich verbundenen ersten Wand (H1) und einer aus schwimmfähigen Körpern gebildeten zweiten Wand (H2) so zu gestalten, daß sie mit der aus schwimmfähigen Körpern gebildeten ersten Wand (H1) bei eintretendem Hochwasser selbsttätig eine Erhöhung der Schutzbebauung leistet und dies über eine möglichst große Spanne zusätzlicher Wasserhöhe und ferner frei von Dichtungsproblemen an Nahtstellen zwischen einzelnen schwimmfähigen Körpern ist, ist vorgesehen, daß die zweite Wand (H2) wasserseitig vor der ersten Wand (H1) und parallel zu dieser angeordnet ist und daß die erste Wand (H1) mit der zweiten Wand (H2) über einen in vertikaler Richtung geführten Gleitmechanismus (H7, H8) derart verbunden ist, daß bei steigendem Wasserpegel die aus schwimmfähigen Körpern gebildete zweite Wand (H2) gegenüber der ersten Wand (H1) aufgrund ihres Auftriebes senkrecht nach oben verschoben wird.

## Beschreibung

Die Erfindung betrifft eine Hochwasserschutzwand zum Zurückhalten von Wasser im Uferbereich von Gewässern, wie Flüssen, Seen, Meeren oder dergleichen, bei über den Normalpegel steigenden Wasserstand mit einer ortsfest mit dem Uferbereich verbundenen ersten Wand und einer aus schwimmfähigen Körpern gebildeten zweiten Wand.

Im Bereich des Hochwasserschutzes ist es ein bekanntes Problem, daß Gewässer einen stark schwankenden Pegel, insbesondere einen vom Normalpegel nach oben abweichenden Wasserstand aufweisen können. Dabei können die Gewässer bei fehlenden Hochwässerschutzmaßnahmen über die Ufer treten und zu verheerenden Überschwemmungen führen. Dies ist in der jüngeren Vergangenheit insbesondere häufig bei Flüssen geschehen. Die daraus resultierenden Fluten haben zu sehr hohen wirtschaftlichen Schäden geführt und nicht zuletzt auch Menschenleben bedroht.

Zwar gibt es bauliche Hochwasserschutzmaßnahmen, wie bspw. Deiche, jedoch sind diese nicht überall einsetzbar, bspw. nicht im Bereich von städtischer Bebauung, und es kann auch bei derartigen baulichen Hochwasserschutzmaßnahmen vorkommen, daß die Bauhöhe für ein eintretendes Hochwasser nicht ausreicht.

In Fällen von Hochwasser werden daher bestehende bauliche Hochwasserschutzmaßnahmen künstlich erhöht, indem bspw. Sandsäcke aufgeschichtet oder Schutzwände oder -wälle errichtet werden.

Ferner ist aus der DE 202 04 837 U1 eine Hochwasserschutzwand mit den Merkmalen des Oberbegriffs des Anspruchs 1 bekannt. Bei dieser Hochwasserschutzwand sind selbsttätig schwimmfähige Körper über Scharniere mit einer fest mit dem Uferbereich verankerten Wand verbunden. Die Körper sind bei normalem Wasserstand unterhalb des Niveaus der Uferbefestigung eingeklappt, werden bei steigendem Wasserstand jedoch von dem aufsteigenden Wasser mitgenommen und aufgeklappt und stellen so eine zusätzliche Barriere für das Wasser dar.

Diese Konstruktion hat aber zum Nachteil, daß, wenn die Körper bei normalem Wasserpegel frei herabhängen sollen, die Uferbefestigung entweder um eine erhebliche Höhe oberhalb des Wasserpegels liegen muß oder die zusätzliche Schutzhöhe durch die aufklappenden Körper gering ist. Ferner ist es nicht möglich, die einzelnen Körper über eine größere Länge zu verbinden, und es entstehen so Probleme hinsichtlich des Eindringens von Wasser an den Nahtstellen zwischen den aufgerichteten Körpern. Zudem ist der Neigungswinkel der Körper gegenüber dem Wasserspiegel und damit die Fähigkeit einem Wasserdruck standzuhalten je nach Wasserstand und damit Aufrichtungsgrad der Körper verschieden.

Ausgehend von diesem Stand der Technik liegt der Erfindung die Aufgabe zugrunde, eine Hochwasserschutzwand der eingangs genannten Art zu schaffen, die mit einer aus schwimmfähigen Körpern gebildeten ersten Wand bei eintretendem Hochwasser selbsttätig eine Erhöhung der Schutzbebauung leistet und dies über eine möglichst große Spanne zusätzlicher Wasserhöhe. Die Hochwasserschutzwand soll ferner frei von Dichtungsproblemen an Nahtstellen zwischen einzelnen schwimmfähigen Körpern sein.

Diese Aufgabe wird gelöst durch eine Hochwasserschutzwand der eingangs genannten Art, die ferner die Merkmale des kennzeichnenden Teils des Anspruchs 1 aufweist.

Dadurch, daß die zweite Wand parallel zu der ersten und wasserseitig vor dieser angeordnet ist, kann sie bei einsetzendem Hochwasser durch den Auftrieb der schwimmfähigen Körper bedingt aufsteigen und stellt einen sicheren Wall gegen eine Überflutung dar. Durch den Gleitmechanismus ist sichergestellt, daß die zweite Wand an der ersten Wand in einer zuverlässigen vertikalen Führung entlang gleiten kann. Je nach Wassertiefe im Uferbereich kann die Tiefe der zweiten Wand in vertikaler Richtung und damit die zusätzlich mögliche Schutzhöhe gewählt werden. Insbesondere in Bereichen, in denen das Ufer steil abfällt, bspw. in Häfen, kann eine zweite Wand mit großer zusätzlicher Schutzhöhe eingesetzt werden.

Weitere vorteilhafte Ausgestaltungen sind in den Unteransprüchen angegeben.

Eine Ausführung des Gleitmechanismus als Gleitschiene und in der Gleitschiene geführter Gleitkörper, wie sie in Anspruch 2 angegeben ist, stellt eine besonders einfache und sichere Umsetzung eines solchen Mechanismus dar.

Dichtungen in den Gleitschienen, wie sein nach Anspruch 3 vorgesehen sind, verhindern im Falle eines Hochwassers und aufgeschwommener zweiter Wand ein Überlaufen von Wasser über die Gleitschienen.

Ist die zweite Wand, wie in Anspruch 5 angegeben, aus zwei miteinander verbundenen Spundwänden gebildet, läßt sich diese aus herkömmlichen Materialien einfach aufbauen. Bekannte Spundwände, die mit "wellenförmigem" Profil ausgeführt sind, können so aufeinander gelegt und miteinander verschweißt werden, daß zwischen zwei "Wellenbergen" ein Hohlraum entsteht, während zwei "Wellentäler" aneinander anliegen. Auf dese Weise entsteht eine Wand mit in vertikaler Richtung verlaufenden Hohlräumen, die im unteren Bereich und gegebenenfalls auch im oberen Bereich durch entsprechende Abschlußbleche oder ähnliches verschlossen werden. In der Ausgestaltung nach Anspruch 5 ist im oberen Bereich allerdings ein Abschlußhohlkörper vorgesehen, der zum einen den Abschluß der durch die beiden aneinandergelegten Spundwände gebildeten Hohlräume bildet, zum anderen einen weiteren schwimmfähigen Körper darstellt, der den Auftrieb der zweiten Wand mit unterstützt.

Ist die Hochwasserschutzwand wie in Anspruch 6 vorgesehen gebildet, ist sie bei normalem Wasserstand keine störende Barriere, sondern kann "unauffällig" in der Bebauung integriert werden.

Ein Arretierungsfortsatz, wie in Anspruch 7 gegeben verleiht der Konstruktion eine zusätzliche Stabilität in horizontaler Richtung. Bei normalem Wasserpegel kann dieser Fortsatz ein entsprechendes uferfestes Gegenstück hintergreifen und so die zweite Wand zusätzlich stabilisieren.

Eine schräge Unterkante des Abschlußhohlkörpers, wie in Anspruch 8 beschrieben, verhindert Verletzungen insbesondere bei der Montage der zweiten Wand. Durch den aufgrund der Schräge verbleibenden Zwischenraum zwischen der Uferbebauung und dem Überstand des Abschlußhohlkörpers ist die Gefahr von bspw. Quetschungen zwischen diesen Teilen verringert.

Ist die Hochwasserschutzwand schließlich wie in Anspruch 9 angegeben aufgebaut, kann sie modular errichtet, demontiert und gewartet werden. Einzelne Elemente können ersetzt werden. Eine solche Wand kann aus einer den Gegebenheiten entsprechenden Anzahl von Elementen mit einer standardisierten Baubreite aufgebaut werden.

Weitere Merkmale und Vorteile der Erfindung ergeben sich aus der nachfolgenden Beschreibung eines Ausführungsbeispiels anhand der beigefügten Figuren.

In den Figuren zeigen:
- Fig. 1: einen Schnitt durch eine Uferbebauung mit einer erfindungsgemäßen Hochwasserschutzwand bei normalem Wasserpegel,
- Fig. 2: einen Schnitt vergleichbar dem in Figur 1 jedoch bei Hochwasser und aufgeschwommener zweiter Wand,
- Fig. 3: eine Aufsicht auf die in Fig. 1 dargestellte Hochwasserschutzwand von oben,
- Fig. 4: eine Verbindung zwischen zwei Elementen der zweiten Wand im Detail und
- Fig. 5: einen vergrößerten Ausschnitt aus der Schnittdarstellung in Fig. 1.

Die in den Figuren 1 bis 5 gezeigte Hochwasserschutzwand besteht aus einer uferfesten ersten Schutzwand und einer beweglichen, zweiten Schutzwand. Die erste Schutzwand besteht aus herkömmlichen Spundwandelementen **H1** die mit einer Gleitschiene **H7** ausgerüstet sind.

An den Spundwandelemente **H1** sind Verbindungsprofile **H12** (U-Eisen) angeordnet, mit denen sie fest mit dem Uferbereich verbunden sind. Die Spundwände **H1** können aber auch vor schon vorhandene Schutzmauern (Spundwände, Steinmauern, Betonmauern, Holzbohlen) eingelassen und mit diesen und dem Uferbereich verbunden werden.

Die Gleitschienen **H7** sind mit einem zur Wasserseite versehenen Schlitz ausgerüstet in dem an Spundwandelementen **H2** der beweglichen zweiten Schutzwand angeordnete Gleiter **H8** laufen.

Die Gleitschienen **H7** sind unten geschlossen, um ein unbeabsichtigtes Herausrutschen der Gleiter **H8** zu verhindern.

Nach oben werden die Gleitschienen **H7** nach Einführung der Gleiter **H8** mit einem Sicherheitsbolzen **H13** verschlossen, um ein zu hohes Aufschwimmen der zweiten, selbsttätig schwimmfähigen Schutzwand bei extremem, außergewöhnlichen Hochwasser zu verhindern.

Die zweite Schutzwand wird so zwar überflutet, rastet aber nicht aus, und kann somit nicht kippen.

Die Anzahl der Gleiter **H8** richtet sich nach der Höhe der schwimmfähigen zweiten Schutzwand und dem Wasserdruck.

Die Gleiter **H8** sind an der selbsttätig schwimmfähigen Schutzwand **H2** gebildeten, wabenförmigen Hohlkörpern angebracht und mit einem Verstärkungseisen **H11** zur zusätzlichen Festigkeit der zweiten Schutzwand verbunden.

Die selbsttätig schwimmfähige zweite Schutzwand besteht aus zwei Spundwand-Elementen **H2** eines vierfachen Spundwand-Profils, die so miteinander verbunden sind, daß ein wabenförmiger Hohlraum als Schwimmkörper (Luftkammer) **H4** entsteht.

Der wabenförmige Hohlraum **H4** ist an der unteren Seite mit einem Stahlblech verschlossen.

Die obere Seite des wabenförmigen Hohlraumes **H4** wird mit dem Abschlußhohlkörper **H3** verschlossen, der als zusätzlicher Schwimmkörper dient.

Der wabenförmige Hohlraum **H4** der zweiten, schwimmfähigen Schutzwand gibt dieser eine Festigkeit, so daß diese bspw. in einem Hafen auch weiterhin als Schiffsanleger genutzt werden kann.

Die Höhe der selbsttätig schwimmfähigen, zweiten Schutzwand richtet sich nach mehreren Gegebenheiten, insbesondere den folgenden Fragestellungen:

Wie hoch ist das Maß zwischen Landseite/ Uferbereich ("Schutzzone") und Wasserseite ("Fluß-, See- oder Meeresgrund")?

Welche Schutzwandhöhe wird benötigt und welche Schutzwandhöhe ist aus statischen Gründen (z. B. Wassermenge und Druck) möglich?

Die zweite Schutzwand ist aus einzelnen Elementen aufgebaut. Die beiden Längsseiten der Elemente der schwimmfähigen, zweiten Schutzwand sind mit einer gezahnten Nut und Feder **H5** versehen, so daß die einzelnen Elemente im Steckverfahren miteinander verbunden und bei Reparaturen einzeln ausgetauscht werden können. Ein Austausch geschieht durch ein nach oben Herausziehen der einzelnen Elemente. Auf analoge Weise sind in dem hier gezeigten Beispiel auch einzelne Elemente der ersten Schutzwand an Verbindungen **H6** miteinander verbunden.

Der Abschlußhohlkörper **H3** ist fest mit der schwimmfähigen, zweiten Schutzwand verbunden, beide Bauteile haben in horizontaler Richtung die gleiche Länge, so daß Sie in einer Einheit zusammengesetzt werden können, und eine einzelne Demontage auch schnell ausgeführt werden kann.

Die Abschlußhohlkörper **H3** sind an den beiden Abschlußseiten mit einer trapezförmigen Verbindung **H10** versehen, die die Abschlußhohlkörper **H3** fest miteinander verbindet, aber auch einen schnellen Austausch ermöglicht.

Für einen schnellen Austausch sind die Abschlußhohlkörper **H3** mit herausschraubbaren Montageösen **H15** versehen.

Aus Sicherheitsgründen ist das Bodenblech des Abschlußhohlkörper **H3** zum Uferbereich bzw. zur Landseite nach oben hin abgeschrägt, um beim Absenken der zweiten Schutzwand Verletzungen, wie insbesondere Quetschungen, zu verhindern.

Auch kann der Abschlußhohlkörper **H3,** sofern an der Stelle der Hochwasserschutzwand Publikumsverkehr erwartet wird, mit einem Sicherheitsgitter **H16** ausgerüstet und mit Rettungsleitern versehen werden.

Außerdem ist der Abschlußhohlkörper **H3** mit Sicherheitslaschen **H14** versehen die bei abgesenkter zweiter Schutzwand hinter die feste mit dem Uferbereich verbundene erste Schutzwand (Spundwand) greifen, und so für eine zusätzliche Stabilität sorgen.

Um ein Eindringen von Wasser zwischen der festen, mit dem Uferbereich verbundenen, ersten Schutzwand und der selbsttätig schwimmfähigen, zweiten Schutzwand zu verhindern, ist am obersten Ende der festen, ersten Schutzwand ein Dichtungselement **H9a, H9c** angebracht.

Das Dichtungselement **H9a, H9c** wird mit einer Verbindungsschraube **H9b** an der Wasserseite der feststehenden, ersten Schutzwand angebracht.

Die feststehende, erste Schutzwand ragt einige Zentimeter über die befestigte Uferzone hinaus, um jederzeit ein Auswechseln des Dichtungselement **H9a, H9c** zu ermöglichen.

Das Dichtungselement **H9a, H9c** selbst besteht aus einem Befestigungs- und Stabilisierungs-Winkelprofil **H9c,** das mit einem Dichtungsprofil **H9a** verbunden und mit der Verbindungsschraube **H9b** an der feststehenden Schutzwand befestigt ist.

Das Winkelprofil **H9c** soll verhindern, daß das Dichtungsprofil **H9a** bei Hochwasser, verbunden mit erhöhtem Wasserdruck und gleichzeitig ansteigender zweiter Schutzwand, nach oben überklappt und so Wasser durchlaufen kann.

Das Dichtungsprofil **H9a** kann aus Gummi, Silikon oder einem anderen dauerhaft elastischen Material bestehen, eventuell versehen mit einem elastischen Draht- oder Kunststoffgewebe um dem Dichtungsprofil **H9a** noch mehr Festigkeit zu geben.

Das Dichtungsprofil **H9a** ist verbunden mit dem Winkelprofil **H9c** und drückt mit seiner nach unten und wieder leicht zurückgehender Nase gegen das Profil der selbsttätig schwimmfähigen, zweiten Schutzwand, und wird bei steigendem Wasser durch den höheren Druck fester an das Profil der aufsteigenden zweiten Schutzwand gedrückt.

### Bezugszeichenliste

- H1: Spundwandelement, fest
- H2: Spundwandelement, beweglich
- H3: Abschlußhohlkörper
- H4: Schwimmkörper (Luftkammer der beweglichen Spundwand)
- H5: Verbindung (Spundwand, beweglich)
- H6: Verbindung (Spundwand, fest)
- H7: Gleitschiene
- H8: Gleiter
- H9a: Dichtungsprofil
- H9b: Verbindungsschraube
- H9c: Stabilisierungsprofil (Winkelprofil)
- H10: Steckverbindung (Abschlußhohlkörper)
- H11: Verstärkungseisen
- H12: Verbindungsprofil
- H13: Sicherheitsbolzen
- H14: Sicherheitslasche
- H15: Montageöse (ausschraubbar)
- H16: Sicherheitsgitter

## Patentansprüche

1. Hochwasserschutzwand zum Zurückhalten von Wasser im Uferbereich von Gewässern, wie Flüssen, Seen, Meeren oder dergleichen, bei über den Normalpegel steigenden Wasserstand mit:
einer ortsfest mit dem Uferbereich verbundenen ersten Wand (H1) und
einer aus schwimmfähigen Körpern gebildeten zweiten Wand (H2),
**dadurch gekennzeichnet, daß** die zweite Wand (H2) wasserseitig vor der ersten Wand (H1) und parallel zu dieser angeordnet ist und daß die erste Wand (H1) mit der zweiten Wand (H2) über einen in vertikaler Richtung geführten Gleitmechanismus (H7, H8) derart verbunden ist, daß bei steigendem Wasserpegel die aus schwimmfähigen Körpern gebildete zweite Wand (H2) gegenüber der ersten Wand (H1) aufgrund ihres Auftriebes senkrecht nach oben verschoben wird.

2. Hochwasserschutzwand nach Anspruch 1, **dadurch gekennzeichnet, daß** der Gleitmechanismus (H7, H8) durch an einer der Wände, vorzugsweise an der ersten Wand (H1), angeordnete, vertikal verlaufende Gleitschienen (H7) und an der anderen der Wände, vorzugsweise der zweiten Wand (H2), angeordnete, in den Gleitschienen (H7) geführte Gleitkörper (H8) gebildet ist.

3. Hochwasserschutzwand nach Anspruch 2, **dadurch gekennzeichnet, daß** die Gleitschienen (H7) an ihren unteren und oberen Enden gegen ein Hinausgleiten der Gleitkörper (H8) verriegelt sind.

4. Hochwasserschutzwand nach einem der Ansprüche 2 oder 3, **dadurch gekennzeichnet, daß** in den Gleitschienen (H7) am oberen Ende Dichtungen (H9a, H9c) angeordnet sind, welche die Wand (H1), an der die Gleitschienen (H7) angeordnet sind, gegen die andere Wand (H2) abdichten.

5. Hochwasserschutzwand nach einem der vorhergehenden Ansprüche, **dadurch gekennzeichnet, daß** die zweite Wand (H2) durch zwei miteinander verbundene Spundwände, die Hohlräume einschließen, und einen oben auf die beiden Spundwände aufgesetzten, ebenfalls einen Hohlraum einschließenden Abschlußhohlkörper (H3) gebildet ist.

6. Hochwasserschutzwand nach Anspruch 5, **dadurch gekennzeichnet, daß** der der Auftrieb der zweiten Wand (H2) in dem Wasser des Gewässers so bemessen ist, daß der Abschlußhohlkörper (H3) bei normalem Wasserstand auf der Uferseite aufliegt.

7. Hochwasserschutzwand nach einem der Ansprüche 5 oder 6, **dadurch gekennzeichnet, daß** der Abschlußhohlkörper (H3) uferseitig über den Rand der zweiten Wand (H2) hinaus ragt und auf seiner Unterseite einen nach unten weisenden Arretierungsfortsatz (H14) aufweist.

8. Hochwasserschutzwand nach Anspruch 7, **dadurch gekennzeichnet, daß** der Abschlußhohlkörper (H3) uferseitig eine schräg verlaufende Unterkante aufweist.

9. Hochwasserschutzwand nach einem der vorhergehenden Ansprüche, **dadurch gekennzeichnet, daß** die aus schwimmfähigen Körpern gebildete zweite Wand (H2) aus entlang vertikaler Verbindungsstellen zusammengefügten und einzeln lösbaren Elementen gebildet ist.
